(19) Europäisches Patentamt
European Patent Office
Office européen des brevets

(11) **EP 3 009 210 B1**

(12) **EUROPEAN PATENT SPECIFICATION**

(45) Date of publication and mention of the grant of the patent:
**22.05.2019 Bulletin 2019/21**

(21) Application number: **13886682.7**

(22) Date of filing: **13.06.2013**

(51) Int Cl.:
*B22F 1/00* (2006.01)   *H01G 9/042* (2006.01)
*B22F 9/22* (2006.01)   *C22C 1/04* (2006.01)
*H01G 9/15* (2006.01)   *H01G 9/00* (2006.01)

(86) International application number:
**PCT/JP2013/066319**

(87) International publication number:
**WO 2014/199480 (18.12.2014 Gazette 2014/51)**

(54) **PRODUCTION METHOD OF BETA TANTALUM POWDER, GRANULATED TANTALUM POWDER, USED THEREOF IN SOLID ELECTROLYTIC CAPACITOR**

HERSTELLUNGSVERFAHREN VON BETA TANTALUM PULVER, TANTALUM PULVER, BENÜTZUNG VON TANTALUM PULVER IM FESTELEKTROLYTKONDENSATOR

MÉTHODE DE PRODUCTION DE POUDRE DE BÉTA-TANTALE, GRANULAT DE POUDRE DE TANTALE ET SON UTILISATION DANS UN CONDENSATEUR ÉLECTROLYTIQUE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2016 Bulletin 2016/16**

(73) Proprietor: Ishihara Chemical Co., Ltd.
**Kobe-shi
Hyogo-ken 652-0806 (JP)**

(72) Inventors:
• **Maeshima Takayuki
Kobe-shi
Hyogo 652-0806 (JP)**
• **YONEHANA Yasunori
Kobe-shi
Hyogo 652-0806 (JP)**
• **SAKAI Hisakazu
Kobe-shi
Hyogo 652-0806 (JP)**
• **FURUTANI Jyun
Kobe-shi
Hyogo 652-0806 (JP)**
• **SATOH Issei
Kobe-shi
Hyogo 652-0806 (JP)**

(74) Representative: **Grünecker Patent- und Rechtsanwälte
PartG mbB
Leopoldstraße 4
80802 München (DE)**

(56) References cited:
**WO-A1-2005/099936   DE-A1- 2 445 564
JP-A- 2000 226 607   JP-A- 2002 134 358**

• **SCHWARTZ N ET AL: "Temperature coefficient of resistance of beta-tantalum films and mixtures with b.c.c.-tantalum", THIN SOLID FILMS, ELSEVIER-SEQUOIA S.A. LAUSANNE, CH, vol. 14, no. 2, 15 December 1972 (1972-12-15), pages 333-346, XP025617283, ISSN: 0040-6090, DOI: 10.1016/0040-6090(72)90433-6 [retrieved on 1972-12-15]**
• **HIEBER ET AL: "Structural and electrical properties of Ta and Ta nitrides deposited by chemical vapour deposition", THIN SOLID FILMS, ELSEVIER-SEQUOIA S.A. LAUSANNE, CH, vol. 24, no. 1, 1 November 1974 (1974-11-01), pages 157-164, XP025699081, ISSN: 0040-6090, DOI: 10.1016/0040-6090(74)90261-2 [retrieved on 1974-11-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- Daniel Cristea ET AL: "TANTALUM BASED THIN FILMS PREPARATION, STRUCTURES AND PROPERTIES PREPARAREA, STRUCTURA SI PROPRIETATILE STRATURILOR SUBTIRI BAZATE PE TANTAL", , 1 April 2013 (2013-04-01), XP055328591, Retrieved from the Internet: URL:http://recentonline.ro/038/Cristea-R38 .pdf [retrieved on 2016-12-13]

- B R D Burbank: "An X-ray Study of p-Tantalum", J. Appl. Cryst, 1 January 1973 (1973-01-01), page 217, XP055329856, Retrieved from the Internet: URL:http://journals.iucr.org/j/issues/1973 /03/00/a10478/a10478.pdf

**Description**

TECHNICAL FIELD

This invention relates to Ta powder obtained by the method of claim 1 used in an anodic electrode (anode) of a small-size, large-capacity tantalum solid electrolytic capacitor, which is mainly used in electronic devices such as personal computers, mobile phones and so on, a method of producing the same as well as a Ta granulated powder obtained by granulating the Ta powder.

RELATED ART

The capacitor is a type of electronic parts used in the electronic devices such as personal computers, mobile phones and so on, and has a structure that a dielectric body is basically sandwiched between two opposed electrode plates. When a direct current voltage is applied to the capacitor, electric charges are stored in the respective electrodes by a polarizing action of the dielectric body. As the capacitor, there are a number of different ones. Among them, an aluminum electrolytic capacitor, a laminated ceramic capacitor, a tantalum electrolytic capacitor and a film capacitor are mainly used at the present day.

As the capacitor, small-size and high-capacity ones are recently used in association with reduction in size and weight and high functionalization of the electronic devices. Therefore, tantalum solid electrolytic capacitors (hereinafter referred to as "Ta capacitor" simply) are used because they are somewhat expensive but are small in the size and large in the capacity and have excellent properties such as good high-frequency property, stability to voltage and temperature, long service life and so on.

The Ta capacitor utilizes a fact that tantalum pentoxide ($Ta_2O_5$) as an anodic oxide film of Ta is excellent as a dielectric body, and is common to be produced by a process of compression-shaping a Ta powder as an anode material and sintering under a high vacuum to form a porous element, subjecting to a chemical conversion treatment (anodizing treatment) to form an oxide film (amorphous $Ta_2O_5$ film) having excellent corrosion resistance and insulation properties or a dielectric film on the surface of the Ta powder as an anode, impregnating a solution of manganese nitrate into the porous element, performing heat decomposition to form $MnO_2$ layer (electrolyte) on the anodic oxide film as a cathode, forming lead wires connecting the electrodes with graphite, silver paste or the like and packaging them with a resin or the like. Recently, ones having improved high-frequency properties or high-current characteristics are developed and put into practical use by using a high-conductive polymer material such as polypyrrole, polyaniline or the like instead of $MnO_2$.

As an indicator evaluating electric characteristics of tantalum powder for a capacitor is generally used a CV value ($\mu F \cdot V/g$). At the moment, the CV value of the commercially available Ta powder is generally about 50~100 kCV, and about 100~200 kCV even in a high-capacity product. To this end, it is strongly desired to develop tantalum powder for a capacitor having a higher CV value, preferably not less than 220 kCV.

An accumulable charge capacity C of the capacity per unit voltage is expressed by the following equation:

$$C = (\varepsilon \cdot S)/t$$

wherein S is an electrode area ($m^2$), t is a distance between electrodes (m), $\varepsilon$ is a dielectric constant (F/m), $\varepsilon = \varepsilon_S \cdot \varepsilon_0$, and $\varepsilon_S$ is a relative permittivity of a dielectric body (oxide film of Ta: about 27) and $\varepsilon_0$ is a vacuum dielectric constant ($8.855 \times 10^{-12}$ F/m). It becomes larger as the electrode area S becomes large or the distance t between electrodes becomes small or the dielectric constant $\varepsilon$ becomes high. In order to increase the CV value, therefore, it is effective to increase the anode area S or a surface area of Ta powder constituting the anode or to decrease the distance t between electrodes or a thickness of anodic oxide film $Ta_2O_5$.

In order to increase the surface area of Ta powder, it is effective to make a primary particle size of Ta powder small. Therefore, miniaturization in the primary particle size of Ta powder is progressed in association with the increase of capacity in recent years. However, as the primary particle size is made small, a bonded portion of metal particles (necked portion) becomes small, so that there is a problem that the bonding of mutual metal particles is broken by an oxide film through chemical conversion treatment to cause reduction of electrostatic capacity. Also, the miniaturization of primary particles brings about the increase of an amount of a gaseous ingredient such as oxygen, nitrogen, hydrogen or the like adsorbed on the surface or the other impurity ingredient, which adversely affects characteristics as a capacitor. Therefore, the Ta powder is desirable to have a size of a certain scale, concretely not less than 30 nm.

As a method of industrially producing a Ta powder used for a Ta capacitor are currently known a Na reduction method wherein $K_2TaF_7$ is reduced with Na (Patent Document 1), a Mg reduction method wherein $Ta_2O_5$ is reduced

with Mg (Patent Document 2), a grinding method wherein a Ta ingot is ground by hydrogenation (Patent Document 3), a thermal CVD method (vapor-phase reduction method) wherein $TaCl_5$ is vaporized and reduced with $H_2$ (Patent Documents 4, 5 and WO2005/099936A1) and so on. The thermal CVD method disclosed in Patent Documents 4 and 5 has a merit of easily providing fine Ta powder, but has a problem that it is difficult to control the particle size or crystallinity or impurity level and hence a large amount of impurities is obtained. In the thermal CVD method, only powder having a finer particle size (primary particles) is obtained, so that there is a problem that the fluidity is bad (for example, Patent Document 6). In view of the above situation, most of Ta powder for a capacitor currently used is produced by the Na reduction method. In this Na reduction method, however, there is a problem that it is difficult to efficiently produce high-capacity fine Ta powder.

The thickness of the anodic oxide film is adjusted by a voltage in chemical conversion treatment. However, the thinning of the thickness causes various problems. For instance, native crystalline oxide film of several nm formed in the production of the powder is existent on the surface of the Ta powder. This oxide film deteriorates the electrical characteristics because it frequently contains a large amount of impurities and is poor in the quality as a dielectric layer or the adhesion property, but when the chemical conversion treatment is performed with a high voltage, the oxide film does not becomes particularly problematic because it is embedded in the thick anodic oxide film. However, as the thickness of the anodic oxide film is thinned due to the lowering of the voltage in the chemical conversion treatment, the crystalline oxide film is exposed to the surface. Furthermore, the decrease of the thickness of the oxide film exposes impurities adsorbed on the surface of the powder and defects of the film resulted therefrom. As a result, leakage current (LC) is increased and harmful influence is exerted on the service life of the capacitor. To this end, there is a limit in the increase of capacity by thinning the thickness of the anodic oxide film $Ta_2O_5$, so that it is important to improve the properties of the oxide film.

As a crystal phase of metallic Ta, there are $\alpha$-phase and $\beta$-phase. The $\alpha$-phase is called as $\alpha$-Ta and is a cubic system and has a low specific resistance of about 20 $\mu\,\Omega$ cm. On the other hand, the $\beta$-phase is called as $\beta$-Ta and is a tetragonal system and has a slightly higher specific resistance of about 170 $\mu\,\Omega$ cm. A bulk metal of Ta inclusive of Ta powder is commonly $\alpha$-Ta, while $\beta$-Ta is known to be existent as only a metal thin film formed by sputtering, and there is no report on powder thereof. However, it is known that when anodizing treatment is performed on the thin film to form a capacitor, $\beta$-Ta exhibits better oxide film properties or good capacitor properties (see, for example, Patent Document 7).

PRIOR ART DOCUMENTS

PATENT DOCUMENTS

Patent Document 1: JP-A-2002-206105
Patent Document 2: JP-A-2002-544375
Patent Document 3: JP-A-H02-310301
Patent Document 4: JP-A-S64-073009
Patent Document 5: JP-A-H06-025701
Patent Document 6: JP-A-2007-335883
Patent Document 7: JP-A-2002-134358

SUMMARY OF THE INVENTION

TASK TO BE SOLVED BY THE INVENTION

Therefore, it is considered that $\beta$-Ta of tetragonal system is preferable as tantalum powder used in the anode for attaining the increase of CV in tantalum solid electrolytic capacitors and the decrease of leakage current. However, only a Ta powder comprised of $\alpha$-Ta is obtained by the thermal CVD method or Na reduction method of the conventional technique, whereas there is no report on the production method of a Ta powder comprised of $\beta$-Ta crystal phase or including $\beta$-Ta crystal phase at the present time.

It is, therefore, an object of the invention to provide a Ta powder comprised of $\beta$-Ta crystal phase or including $\beta$-Ta phase, which is preferably used in a tantalum solid electrolytic capacitor, and a method of producing the Ta powder. It is another object of the invention to provide a Ta granulated powder obtained by improving fluidity of the Ta powder.

SOLUTION FOR TASK

The inventors have focused attention on an influence of production conditions upon particle size and crystal structure of a Ta powder under basic ideas that it is important to control particle size of Ta powder (primary particles) to an adequate range and improve properties of an oxide film for increasing a CV value of a Ta capacitor and that a Ta powder including β-Ta phase is obtained by thermal CVD method (vapor-phase reduction method) close to the film formation technique by sputtering, and have made various studies. As a result, it has been found that a Ta powder comprised of a single phase of β-Ta or a mixed phase of β-Ta and α-Ta can be obtained and also a particle size thereof can be controlled to an adequate range by controlling a feeding rate of a raw material gas ($TaCl_5$ vapor) to a reduction reaction field in thermal CVD method (vapor-phase reduction method), a residence time of the raw material gas in the reduction reaction field and a temperature of the reduction reaction field to an adequate range, respectively. Furthermore, it has been found that it is important to granulate the Ta powder to control particle size and bulk density to adequate ranges for improving fluidity of fine Ta powder, and as a result, the invention has been accomplished.

The invention based on the above knowledge is a Ta powder characterized by comprising a single phase of β-Ta of tetragonal system or a mixed phase of β-Ta of tetragonal system and α-Ta of cubic system and having an average particle size of 30~50 nm.

The Ta powder according to the invention is characterized by having a CV value ($\mu$F • V/g) of not less than 220 kCV.

Also, the invention proposes a method of producing a Ta powder by vaporizing $TaCl_5$ as a raw material through heating, feeding to a reduction reaction field together with a carrier gas and reducing the $TaCl_5$ vapor with $H_2$ gas in the reduction reaction field to form Ta powder according to claim 1 or 2, characterized in that a feeding rate of the $TaCl_5$ vapor to the reduction reaction field is 0.05~5.0 g/cm$^2$ • min and a residence time of the $TaCl_5$ vapor in the reduction reaction field is 0.1~5 seconds, and the $TaCl_5$ vapor is reduced at a temperature of 1100~1600°C.

Furthermore, the invention is a Ta granulated powder formed by granulating the aforementioned Ta powder and characterized by having a median diameter on a volume basis of 10~500 $\mu$m, a bulk density of 2.0~5.0 g/cm$^3$ and a fluidity of 1~5 g/sec as measured with a funnel having an orifice diameter of 2.63 mm.

The Ta granulated powder according to the invention is characterized in that it is used in an electrode of a tantalum solid electrolytic capacitor.

EFFECT OF THE INVENTION

According to the invention, a Ta powder comprised of a single phase of β-Ta or a mixed phase of β-Ta and α-Ta and having an average particle size of 30~150 nm can be produced stably, so that it is possible to stably provide a tantalum solid electrolytic capacitor improving electrical characteristics of anodic oxide film formed by chemical conversion treatment and having a high electrostatic capacity of not less than 220 k as a CV value.

BRIEF DESCRIPTION OF THE DRAWINGS

FIG. 1 is a photograph of Ta powder (primary particles) according to the invention observed by means of a scanning type electron microscope (SEM).
FIG. 2 is a schematic view illustrating an example of a thermal CVD apparatus used in the production of Ta powder according to the invention.

EMBODIMENTS FOR CARRYING OUT THE INVENTION

A Ta powder used in a tantalum solid electrolytic capacitor according to the invention is a Ta powder produced by a thermal CVD method (vapor-phase reduction method) of reducing vapor of Ta chloride ($TaCl_5$) with $H_2$ gas, which is necessary to be comprised of a single phase of β-Ta of tetragonal system or a mixed phase of β-Ta of tetragonal system and α-Ta of cubic system and have an average particle size of 30~150 nm. The reason for the limitations will be described below.

At first, the Ta powder according to the invention is necessary to be produced by the thermal CVD method. The reason is considered due to the fact that the thermal CVD method is suitable for the production of fine metal powder and is the only way capable of producing a β-Ta powder at the moment.

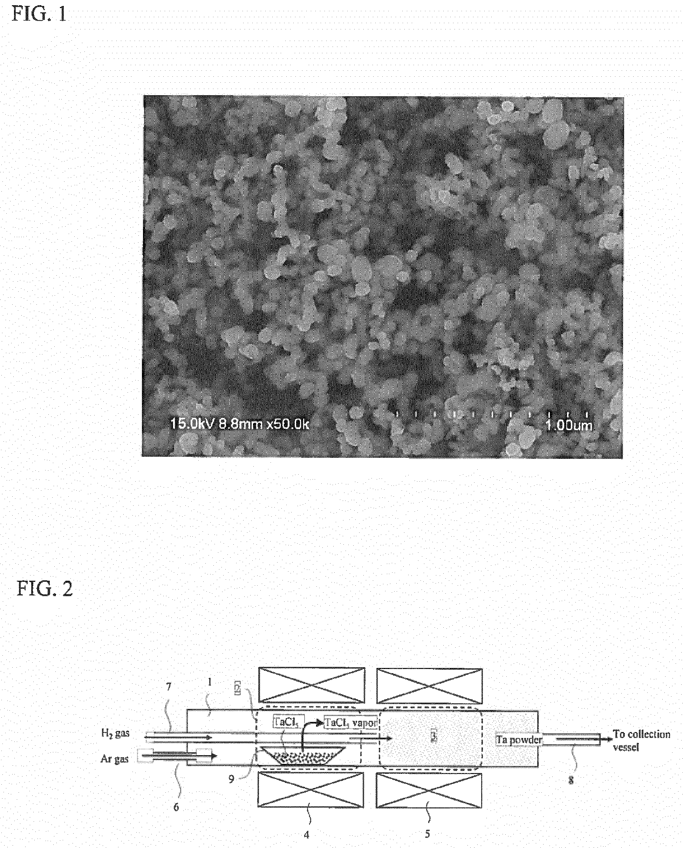

The Ta powder (primary particles) produced by the above thermal CVD method is spherical particles of uniform size as shown in FIG. 1, which is necessary to have an average particle size of 30~150 nm. When the average particle size is less than 30 nm, a bonded portion (necked portion) of particles formed during sintering of Ta powder is weak, so that the bonded portion is ruptured by an anodic oxide film formed through chemical conversion treatment to bring about deterioration of electric conductivity or decrease of electrostatic capacity. While, when the average particle size exceeds 150 nm, the size of primary particles becomes too large to decrease surface area of the Ta powder and it is difficult to stably obtain a target CV value (not less than 220 k). Moreover, the average particle size of the Ta powder is preferably within a range of 50~130 nm, more preferably within a range of 60~120 nm from a viewpoint of stably ensuring the CV value of not less than 220 k. Here, the average particle size of the Ta powder (primary particles) means an average particle size on a number basis when 1000 or more particle sizes are actually measured from a particle image shot by a scanning type electron microscope SEM or the like with an image analysis type particle size distribution software (Mac-View made by Mountech company).

The Ta powder according to the invention is necessary to be comprised of a single phase of β-Ta of tetragonal system or a mixed phase of β-Ta of tetragonal system and α-Ta of cubic system. Because, an anodic oxide film obtained by chemical conversion of β-Ta of tetragonal system is a dielectric film being small in the leakage current, excellent in the heat resistance and high in the reliability as compared with those of an anodic oxide film obtained by chemical conversion of α-Ta as previously mentioned. The above effects are obtained when the Ta powder is comprised of not only the single phase of β-Ta but also the mixed phase of β-Ta and α-Ta.

There will be described the production method of the Ta powder satisfying the above conditions.

Firstly, an apparatus for producing the Ta powder according to the invention is not particularly limited as long as it is based on a thermal CVD method (vapor-phase reduction method). FIG. 2 shows an example of thermal CVD apparatus capable of being used in the production of the Ta powder according to the invention. This thermal CVD apparatus comprises a reaction pipe 1 having a vaporizing part 2 and a reduction reaction field 3, a vaporization furnace 4 for heating the vaporizing part 2 to a given temperature, and a reduction furnace 5 for heating the reduction reaction field 3 to a given temperature. In a side end portion of the vaporizing part of the reaction pipe 1 are arranged a carrier gas feeding pipe for introducing a carrier gas into the inside of the reaction pipe and a reduction gas feeding pipe 7 for feeding a reduction gas to the reduction reaction field 3. On the other hand, an exhaust pipe 8 for discharging a Ta powder produced in the reduction reaction field together with the carrier gas is arranged in a side end portion of the reduction reaction field of the reaction pipe 1 and connected to a collection vessel of Ta powder not shown.

In the thermal CVD method, an inert gas such as Ar gas, He gas, $N_2$ gas or the like is generally used as a carrier gas, and a reducing gas such as $H_2$ gas, $H_2$-containing gas, CO gas or the like is generally used as a reduction gas. In the invention, a rare gas such as Ar gas or He gas is used as the carrier gas, and $H_2$ gas is used as the reduction gas for preventing contamination of the resulting Ta powder. Since Ta is a metal easily reacting at a high temperature, it is prevented that a part of the powder is rendered into TaN or TaC by reacting with $N_2$ gas or CO gas or C generated by reduction of CO gas is included in the Ta powder.

The production method of the Ta powder with the above thermal CVD apparatus will be described below.

In the vaporizing part 2 of the reaction pipe is disposed a container (tray) 9 stored with a powdery Ta chloride ($TaCl_5$) as a raw material for Ta powder. In the vaporization furnace 4 disposed so as to encompass the periphery of the vaporizing part is heated $TaCl_5$ located inside the tray 9 to a temperature of about 200- 800°C to generate vapor of $TaCl_5$, while the $TaCl_5$ vapor is fed to the reduction reaction field 3 with Ar gas fed from the carrier gas feeding pipe 6. The reduction reaction field 3 is a space heated to a temperature of not lower than 1100°C by a reduction furnace 5 arranged so as to surround the periphery thereof, where $TaCl_5$ vapor fed to the reduction reaction field 3 together with Ar gas is reduced by $H_2$ gas fed from a reduction gas feeding pipe 7 to produce Ta powder according to the following chemical reaction:

$$TaCl_5 + 5/2H_2 \rightarrow Ta + 5HCl$$

The Ta powder produced in the reduction reaction field 3 is discharged from an exhaust pipe 8 together with the carrier gas and collected by a collection vessel 8 not shown.

In order to produce Ta powder comprised of a single phase of β-Ta or a mixed phase of β-Ta and α-Ta and having an average particle size of 30~150 nm with the above thermal CVD apparatus, it is necessary that the feeding rate of the raw material gas ($TaCl_5$ vapor) to the reduction reaction field in the reaction pipe is a range of 0.05~5.0 g/cm$^2$ • min per unit section area of the reduction reaction field and unit time and the residence time of the $TaCl_5$ vapor in the reduction reaction field is a range of 0.1~5 seconds, while the temperature of the reduction reaction field (reduction temperature) is controlled to a range of 1100~1600°C.

The reason why the feeding rate of the $TaCl_5$ vapor is limited to a range of 0.05~5.0 g/cm$^2$ • min per unit section area of the reduction reaction field and unit time is due to the fact that when the feeding rate of the $TaCl_5$ vapor is less than 0.05 g/cm$^2$ • min, fine particles of Ta powder produced by reduction reaction are miniaturized because of no growth and it is difficult to obtain a particle size of not less than 30 nm aiming at the invention, while when it exceeds 5.0 g/cm$^2$ • min, fine particles of Ta powder produced in the reaction field are considerably grown and it is conversely difficult to control the particle size of the resulting Ta powder to not more than 150 nm. Preferably, it is a range of 0.1~3.0 g/cm$^2$ • min.

Here, the reason why the feeding rate of the $TaCl_5$ vapor is per unit section area of the reduction reaction field (per unit section area in a direction perpendicular to the flowing direction of the raw material gas) is considered due to the fact that since the reduction reaction of the $TaCl_5$ vapor itself is terminated with almost no elapsed time, the influence upon the reduction reaction rate is predominantly larger in the section area of the reduction reaction field than the length of the reduction reaction field. Namely, the reaction pipe 1 is usually cylindrical and is constant in the section area, but the reduction reaction of the $TaCl_5$ vapor in the reduction reaction field 3 itself occurs instantly as long as $H_2$ gas is existent, so that the influence of the feeding amount of the raw material upon the particle size of Ta powder produced by the reduction reaction is predominantly larger in the direction of the section area than in the longitudinal direction of the reaction field.

The reason why the residence time of the $TaCl_5$ vapor in the reduction reaction field is 0.1~5 seconds is considered due to the fact that the particle size of the Ta powder produced by the reduction reaction is increased as the residence time in the reduction reaction field becomes longer or is inversely proportional to the flow rate of the gas fed to the reduction reaction field. Therefore, when the residence time of the $TaCl_5$ vapor in the reduction reaction field is more than 5 seconds, Ta particles are considerably grown and it is difficult to control the particle size to not more than 150 nm, while when it is less than 0.1 second, the residence time in the reaction field becomes extremely short and the particles cannot be grown to a particle size of not less than 30 nm.

The reason why the particle size of Ta powder is proportional to the residence time of $TaCl_5$ vapor in the reduction reaction field as mentioned above is considered as follows. The reduction reaction of the $TaCl_5$ vapor is terminated with almost no elapsed time as previously mentioned. However, the $TaCl_5$ vapor fed to the reduction reaction field with the carrier gas is not immediately mixed with $H_2$ gas fed from the reduction gas feeding pipe. Also, it is necessary that $H_2$ gas is diffused to mix with the $TaCl_5$ vapor for reducing the $TaCl_5$ vapor with $H_2$ gas. Therefore, the reduction reaction of the $TaCl_5$ vapor is considered to be caused in the full region of the reduction reaction field progressing the mixing of $H_2$ gas and $TaCl_5$ vapor, so that the residence time of the $TaCl_5$ vapor in the reduction reaction field affects the particle size of Ta powder.

Moreover, the residence time in the reduction reaction field is determined by dividing the volume of the reduction reaction field by a volume of a feeding gas per unit time. However, since the feeding gas is thermally expanded by heating in the reduction reaction field, it is necessary to convert the total feeding amount of $H_2$ gas and Ar gas to a gaseous volume at an average temperature in the reduction reaction field by Charles' law.

The mixing ratio of $H_2$ gas and Ar gas fed to the reduction reaction field is not particularly limited, but the reaction efficiency can be increased as partial pressure of $H_2$ gas is made higher. Also, the feeding amount of $H_2$ gas and $TaCl_5$ vapor per unit time is necessary to be at least not less than 1 by a molar ratio of $H_2$ to $TaCl_5$ from a viewpoint that the $TaCl_5$ vapor is reduced completely. However, $H_2$ gas fed is not always reacted with all of the $TaCl_5$ vapor, so that when the ratio is less than 2, the reaction efficiency of $H_2$ gas is low. Therefore, the molar ratio of $H_2$ to $TaCl_5$ is preferable to be not less than 2. On the other hand, when the molar ratio exceeds 50, the reaction efficiency becomes higher, but the cost of $H_2$ gas is increased, so that the upper limit is preferable to be about 50.

The reason why the temperature of the reduction reaction field (reduction temperature) is controlled to a range of 1100~1600°C is due to the fact that when the reduction temperature is lower than 1100°C, not only the progression of the reduction reaction is slow as disclosed in Patent Document 4, but also the resulting Ta powder is amorphous and the phase of β-Ta is not generated, while when the temperature exceeds 1600°C, Ta powder itself is produced, but the reaction pipe capable of being industrially used at such a higher temperature and in a chloride-containing atmosphere is not existent at the present time, and hence the production of Ta powder becomes impossible practically.

The Ta powder of the invention produced so as to satisfy the above conditions has an average particle size of 30~150 nm. Further, the inventors have newly found that the Ta powder produced so as to satisfy the above conditions is comprised of a single phase of β-Ta of tetragonal system or a mixed phase of the β-Ta and α-Ta of cubic system, i.e. it is a phase at least mixed with β-Ta phase. Moreover, the existing ratio of α-Ta and β-Ta can be determined semi-quantitatively by $I(\beta Ta_{411})/I(\alpha Ta_{110})$ as a ratio of a 411 diffraction line of X-ray highest peak of β-Ta to a 110 diffraction line of X-ray highest peak of α-Ta by X-ray diffractometry.

Although the reason why β-Ta of tetragonal system is formed when Ta powder is produced under the above conditions is not clear sufficiently at this moment, it is considered that though only the sputtering is conventionally known as a method of producing β-Ta, the thermal CVD method is similar to the sputtering in a point that solid phase is produced from gaseous phase and hence β-Ta is liable to be easily formed. However, β-Ta of tetragonal system is crystallographically unstable as compared with α-Ta of cubic system, so that the conversion of β-Ta to α-Ta is progressed when the high temperature is kept for not less than a given time. Therefore, the residence time in the reduction reaction field of not lower than 1100°C is necessary to be within 5 seconds. Moreover, in order to shorten the high-temperature keeping time, it is preferable that the Ta powder produced in the reduction reaction field is cooled to not higher than 300°C for providing stable β-Ta within 3 seconds.

Since β-Ta of tetragonal system is high in the specific resistance as compared to α-Ta of cubic system, when it is subjected to chemical conversion treatment, an anodic oxide film (chemical converted film) having an excellent dielectric property is obtained. Therefore, when the Ta powder is comprised of a single phase of β-Ta of tetragonal system or a mixed phase of α-Ta of cubic system and β-Ta of tetragonal system and possesses the aforementioned average particle size, it is possible to stably manufacture a Ta capacitor having an electrostatic capacitance of not less than 220 k as a CV value.

Moreover, heavy metal or oxygen as an impurity included in the Ta powder is badly affected to the anodic oxide film to cause the increase of leakage current, so that it is desirable to be decreased as much as possible. Concretely, it is preferable that Fe and Ni are decreased to not more than 0.01 mass% in total and oxygen is decreased to not more than 5 mass%.

When the Ta powder is used as an anode material for a capacitor, it is common to compression-mold the Ta powder into a form of an anode element by means of a dry automatic molding machine. However, the Ta powder produced by the thermal CVD method (primary particles) is fine and low in the bulk density as it is, so that a pushing margin becomes larger and a density of a molded body as an anode element becomes easily non-uniform. Also, it is poor in the fluidity, so that it is difficult to automatically charge into a female mold in the automatic molding machine. In order to use the Ta powder as an anode material, therefore, it is necessary to previously preform granulation to improve the fluidity.

The fluidity is desirable to be within a range of 1~5 g/second as measured with a funnel having an orifice diameter of 2.63 mm. Also, the Ta powder after the granulation is preferable to have a median diameter $d_{50}$ on a volume basis of 10~500 μm and a bulk density of 2.0~5.0 g/cm$^3$. Moreover, the fluidity according to the invention is represented as a value obtained by dividing a mass (g) of a powder to be measured by a dropping time (seconds) measured with a funnel having an orifice diameter of 2.63 mm according to JIS Z2502.

The reason why the fluidity is limited to a range of 1~5 g/second is due to the fact that when the fluidity is less than 1 g/second, since the fluidity is poor, the scattering in the amount of the powder automatically charged to a mold in the automatic molding machine becomes large and hence the scattering in the weight of the anode element after the compression molding becomes larger, while when the fluidity exceeds 5 g/second, the particle size of the granulated powder becomes too large and it is difficult to obtain an anode having a uniform density by compression molding. Preferably, it is a range of 1.5~4 g/second.

The reason why the median diameter $d_{50}$ on a volume basis is limited to a range of 10~500 μm is due to the fact that when $d_{50}$ is less than 10 μm, the fluidity and formability are deteriorated and the molding is difficult, while when $d_{50}$ exceeds 500 μm, it is difficult to uniformly fill the powder into the mold and hence the density of the molded body as an anode element becomes non-uniform. The preferable median diameter $d_{50}$ is a range of 15~300 μm. Moreover, the median diameter $d_{50}$ on a volume basis is a value obtained by measuring an image of particles photographed with a scanning type electron microscope at a magnification of 100 times by means of an image analysis type particle size distribution software as the case of primary particles.

The reason why the bulk density is limited to a range of 2.0~5.0 g/cm$^3$ is due to the fact that when the bulk density is less than 2.0 g/cm$^3$, the electrostatic capacity per unit volume becomes small and the size of the capacitor is made large, while when the bulk density exceeds 5.0 g/cm$^3$, it is difficult to impregnate manganese dioxide $MnO_2$ as a cathode after the sintering. The preferable bulk density is a range of 2.5~4.5 g/cm$^3$. Here, the bulk density in the invention means a bulk density in loosely packed state measured according to JIS Z2504.

Moreover, the method of providing Ta granulated powder from the Ta powder obtained by the thermal CVD method (primary particles) is not particularly limited as long as granulated powder satisfying the above conditions is obtained. For example, there can be preferably used a method wherein the Ta particles obtained by the thermal CVD method arc added with acryl, polyvinyl alcohol (PVA), polyvinyl butyral (PVB), methyl cellulose, carboxyl cellulose or the like as a granulating agent (binder) and granulated by tumbling in a rotary drum or the like, a high-speed rotary granulating method, a fluidized-bed granulating method, a spray drying method and so on.

EXAMPLES

In a thermal CVD apparatus shown in FIG. 2, powdery tantalum pentachloride TaCl$_5$ as a raw material is vaporized by heating, and the resulting vapor is introduced into a reduction reaction field inside a reaction pipe together with a carrier gas (Ar gas), while H$_2$ gas as a reduction gas is fed to the reduction reaction field, whereby TaCl$_5$ vapor is reduced to produce Ta powder. The resulting Ta powder is discharged together with the carrier gas toward the outside of the reaction pipe and collected with a collection vessel (not shown) arranged at a downstream side. In this case, a feeding rate of TaCl$_5$ vapor fed to the reduction reaction field, a residence time of TaCl$_5$ vapor in the reduction reaction field and a temperature of the reduction reaction field are variously changed as shown in Table 1. As the raw material tantalum pentachloride TaCl$_5$ is used a high-purity product having a Ta content of not less than 99.95 mass%, while a material containing a great amount of Fe or Fe and Ni as a n impurity is used in No. 24 and 25 (Comparative Example).

Table 1

| No. | Amount of raw material treated (g) | Powder reduction condition | | | | | | | | | | Remarks |
|---|---|---|---|---|---|---|---|---|---|---|---|---|
| | | Flow rate of H₂ gas (L/min) | Flow rate of Ar gas (L/min) | Flow rate of gas in total (L/min) | Inner diameter of reaction pipe (cm) | Section area of reaction field (cm²) | Feeding rate of raw material gas (g/cm²·min) | Length of reaction field (cm) | Volume of reaction field (L) | Temperature of reaction field (°C) | Residence time of gas (sec) | |
| 1 | 1000 | 1 | 3 | 4 | 4.2 | 13.85 | 0.40 | 80 | 1.11 | 1300 | 3.15 | Invention Example |
| 2 | 1000 | 2 | 2 | 4 | 4.2 | 13.85 | 0.40 | 40 | 0.55 | 1300 | 1.57 | Invention Example |
| 3 | 1000 | 3 | 3 | 6 | 4.2 | 13.85 | 0.40 | 40 | 0.55 | 1300 | 1.05 | Invention Example |
| 4 | 1000 | 1 | 7 | 8 | 4.2 | 13.85 | 0.40 | 40 | 0.55 | 1300 | 0.79 | Invention Example |
| 5 | 1000 | 5 | 5 | 10 | 4.2 | 13.85 | 0.40 | 22 | 0.30 | 1150 | 0.38 | Invention Example |
| 6 | 1000 | 5 | 5 | 10 | 4.2 | 13.85 | 0.40 | 40 | 0.55 | 1300 | 0.63 | Invention Example |
| 7 | 500 | 5 | 5 | 10 | 4.2 | 13.85 | 0.20 | 40 | 0.55 | 1300 | 0.63 | Invention Example |
| 8 | 2000 | 5 | 5 | 10 | 4.2 | 13.85 | 0.80 | 40 | 0.55 | 1300 | 0.63 | Invention Example |
| 9 | 8000 | 7 | 3 | 10 | 4.2 | 13.85 | 3.21 | 40 | 0.55 | 1300 | 0.63 | Invention Example |
| 10 | 1000 | 5 | 5 | 10 | 4.2 | 13.85 | 0.40 | 48 | 0.66 | 1400 | 0.71 | Invention Example |
| 11 | 1000 | 5 | 5 | 10 | 4.2 | 13.85 | 0.40 | 60 | 0.83 | 1550 | 0.81 | Invention Example |
| 12 | 1000 | 7 | 7 | 14 | 4.2 | 13.85 | 0.40 | 40 | 0.55 | 1300 | 0.45 | Invention Example |
| 13 | 1000 | 10 | 10 | 20 | 4.2 | 13.85 | 0.40 | 40 | 0.55 | 1300 | 0.31 | Invention Example |
| 14 | 1000 | 15 | 15 | 30 | 4.2 | 13.85 | 0.40 | 40 | 0.55 | 1300 | 0.21 | Invention Example |
| 15 | 1000 | 10 | 20 | 30 | 4.2 | 13.85 | 0.40 | 40 | 0.55 | 1300 | 0.10 | Invention Example |
| 16 | 1000 | 20 | 20 | 40 | 4.2 | 13.85 | 0.40 | 40 | 0.55 | 1300 | 0.16 | Invention Example |
| 17 | 1000 | 5 | 5 | 10 | 4.2 | 13.85 | 0.40 | 40 | 0.55 | 1300 | 0.63 | Invention Example |
| 18 | 1000 | 5 | 5 | 10 | 4.2 | 13.85 | 0.40 | 40 | 0.55 | 1300 | 0.63 | Invention Example |
| 19 | 1000 | 20 | 50 | 70 | 4.2 | 13.85 | 0.40 | 40 | 0.55 | 1300 | 0.09 | Comparative Example |
| 20 | 1000 | 0.5 | 0.5 | 1 | 4.2 | 13.85 | 0.40 | 40 | 0.55 | 1300 | 6.30 | Comparative Example |
| 21 | 100 | 5 | 5 | 10 | 4.2 | 13.85 | 0.04 | 40 | 0.55 | 1300 | 0.63 | Comparative Example |
| 22 | 1000 | 5 | 5 | 10 | 4.2 | 13.85 | 0.40 | 40 | 0.55 | 1300 | 0.63 | Comparative Example |
| 23 | 1000 | 5 | 5 | 10 | 4.2 | 13.85 | 0.40 | 40 | 0.55 | 1300 | 0.63 | Comparative Example |
| 24 | 1000 | 5 | 5 | 10 | 4.2 | 13.85 | 0.40 | 40 | 0.55 | 1300 | 0.63 | Comparative Example |
| 25 | 1000 | 5 | 5 | 10 | 4.2 | 13.85 | 0.40 | 40 | 0.55 | 1300 | 0.63 | Comparative Example |
| 26 | | | | | | | | | | | | Reference Example |

Na reduced product of potassium fluorotantalate

9

With respect to the thus obtained Ta powder (primary particles) are measured primary particle size, BET specific surface area and crystalline phase by the following methods.

- Primary particle size: The Ta powder is observed with a scanning type electron microscope SEM at a magnification of 5000 times, during which diameters of optionally extracted 1000 particles are measured by imaging to determine an average value on a number basis.
- BET specific surface area: It is measured with $N^2$ gas as an adsorption gas.
- Identification of crystalline phase: The Ta powder is identified by X-ray diffractometry XRD.

Then, the Ta powder (primary particles) is washed with water, dried, added with a cellulose-based binder and granulated by a rotary drum to form granulated powder, which is subjected to the following evaluation tests.

- Measurement of median diameter $d_{50}$: The granulated powder is observed with a scanning type electron microscope at 100 times and subjected to an imaging treatment to determine a median diameter on a volume basis $d_{50}$.
- Measurement of bulk density: The bulk density in loosely packed state is measured according to JIS Z2504 (2000).
- Measurement of fluidity: The fluidity is evaluated by measuring a dropping time per unit g with a funnel having an orifice diameter of 2.63 mm according to JIS Z2502 (2000).
- Evaluation of moldability: After 20 samples are molded in an automatic tantalum molding machine, the moldability is evaluated as a good moldability (○) when all of the molded bodies have no occurrence of defect such as cracking or the like and each standard deviation of target size and target molding density is within 5% as an average value and as a bad moldability (×) when the standard deviation exceeds 5%.
- Measurement of impurity elements: With respect to the powder after granulation are measured O and H by an inert gas melting method, Fe and Ni by an ICP emission spectrometry, and Mg by an atomic absorption spectrometry.

Further, a tantalum sintered element is manufactured by using the Ta granulated powder as an anode material and then electrostatic capacity (CV value) and leakage current are measured according to test conditions of 100 kCV powder defined in Table 1 of Exhibit in Standard by Electronic Industries Association of Japan EIAJ RC-2361A, "Test method of tantalum sintered element for tantalum electrolytic capacitor".

The measured results are shown in Table 2. As seen from Table 2, the CV value is only about 150 k in case of using Ta powder produced by the conventional Na reduction method.

On the contrary, the Ta powder produced under conditions adapted to the invention has a primary particle size of 30~150 nm and its crystalline phase is comprised of a single phase of β-Ta of tetragonal system or a mixed phase of β-Ta and α-Ta of cubic system. Further, Ta capacitor manufactured by using Ta granulated powder, which is formed by granulating the Ta powder within a range adapted to the invention, has an excellent property that the CV value is not less than 220 k.

EP 3 009 210 B1

Table 2

| No. | Properties of primary particles | | | Impurities in granulated particles (mass%) | | | | | Properties of granulated particles | | | Evaluation of moldability | Electrical characteristics of granulated particles | | Remarks |
| --- | --- | --- | --- | --- | --- | --- | --- | --- | --- | --- | --- | --- | --- | --- | --- |
| | Average particle size on a number basis (nm) | BET specific surface area (m²/g) | Ratio of peak intensity (tetragonal system /cubic system) | O | H | Fe | Ni | Mg | Median diameter on a volume basis (µm) | Bulk density (g/cm³) | Fluidity (g/sec) | | KCV value (kµF· V/g) | Leakage current value (IL/CV×10⁻⁴) µA/µF·V | |
| 1 | 145 | 2.6 | 1.05 | 4.5 | 0.32 | <0.001 | <0.001 | <0.0001 | 58.2 | 4.21 | 1.96 | ○ | 220 | 13.9 | Invention Example |
| 2 | 120 | 2.9 | 2.31 | 2.5 | 0.47 | <0.001 | <0.001 | <0.0001 | 26.3 | 3.90 | 1.84 | ○ | 226 | 5.7 | Invention Example |
| 3 | 119 | 3.0 | 2.85 | 2.1 | 0.65 | 0.0008 | 0.0005 | <0.0001 | 43.8 | 3.72 | 1.58 | ○ | 245 | 6.5 | Invention Example |
| 4 | 78 | 5.0 | 3.33 | 3.0 | 0.34 | 0.0005 | <0.001 | <0.0001 | 52.6 | 3.04 | 1.96 | ○ | 308 | 5.5 | Invention Example |
| 5 | 97 | 4.5 | 7.16 | 4.2 | 0.36 | <0.001 | <0.001 | <0.0001 | 53.2 | 3.58 | 1.98 | ○ | 240 | 4.0 | Invention Example |
| 6 | 88 | 4.4 | 3.81 | 2.5 | 0.44 | <0.001 | <0.001 | <0.0001 | 48.5 | 3.27 | 1.58 | ○ | 271 | 7.1 | Invention Example |
| 7 | 55 | 6.5 | ∞(β-single phase) | 2.9 | 0.26 | <0.001 | <0.001 | <0.0001 | 56.1 | 2.78 | 1.86 | ○ | 310 | 2.2 | Invention Example |
| 8 | 98 | 5.0 | 1.72 | 3.2 | 0.36 | <0.001 | <0.001 | <0.0001 | 31.5 | 3.54 | 1.82 | ○ | 270 | 7.0 | Invention Example |
| 9 | 141 | 2.8 | 3.22 | 4.0 | 0.36 | <0.001 | <0.001 | <0.0001 | 54.5 | 4.17 | 1.91 | ○ | 222 | 8.9 | Invention Example |
| 10 | 85 | 3.8 | 1.66 | 3.2 | 0.40 | 0.0016 | 0.0014 | <0.0001 | 39.2 | 3.07 | 2.07 | ○ | 293 | 9.8 | Invention Example |
| 11 | 84 | 4.0 | 0.38 | 2.7 | 0.45 | 0.0027 | 0.0017 | <0.0001 | 66.8 | 3.10 | 1.69 | ○ | 296 | 11.3 | Invention Example |
| 12 | 69 | 5.2 | 0.58 | 3.7 | 0.35 | 0.0017 | <0.001 | <0.0001 | 42.5 | 3.27 | 2.08 | ○ | 312 | 10.3 | Invention Example |
| 13 | 51 | 8.0 | 0.57 | 3.3 | 0.39 | <0.001 | <0.001 | <0.0001 | 38.7 | 2.67 | 1.84 | ○ | 332 | 8.7 | Invention Example |
| 14 | 35 | 10.9 | 0.38 | 3.9 | 0.25 | <0.001 | <0.001 | <0.0001 | 46.1 | 2.38 | 1.92 | ○ | 271 | 14.0 | Invention Example |
| 15 | 34 | 11.8 | 1.33 | 4.8 | 0.30 | <0.001 | <0.001 | <0.0001 | 56.1 | 2.44 | 1.96 | ○ | 260 | 12.9 | Invention Example |
| 16 | 50 | 7.2 | 0.28 | 2.8 | 0.29 | <0.001 | 0.0006 | <0.0001 | 41.7 | 2.57 | 1.75 | ○ | 329 | 14.8 | Invention Example |
| 17 | 88 | 4.4 | 3.81 | 2.5 | 0.44 | <0.001 | <0.001 | <0.0001 | 278 | 3.58 | 2.28 | ○ | 268 | 6.2 | Invention Example |
| 18 | 88 | 4.4 | 3.81 | 2.5 | 0.44 | <0.001 | <0.001 | <0.0001 | 441 | 3.88 | 3.54 | ○ | 297 | 7.1 | Invention Example |
| 19 | 22 | 15.2 | 3.47 | 5.2 | 0.42 | <0.001 | <0.001 | <0.0001 | 18.5 | 1.89 | 1.21 | × | 174 | 21.5 | Comparative Example |
| 20 | 192 | 1.8 | 0.00 | 1.7 | 0.25 | 0.0025 | 0.0014 | <0.0001 | 56.3 | 4.35 | 2.89 | ○ | 198 | 24.6 | Comparative Example |
| 21 | 27 | 11.5 | 3.80 | 4.2 | 0.55 | <0.001 | <0.001 | <0.0001 | 25.4 | 1.92 | 1.34 | × | 213 | 12.3 | Comparative Example |
| 22 | 88 | 4.4 | 3.81 | 2.5 | 0.44 | <0.001 | <0.001 | <0.0001 | 39.2 | 3.25 | 0.73 | × | 207 | 8.3 | Comparative Example |
| 23 | 88 | 4.4 | 3.81 | 2.5 | 0.44 | <0.001 | <0.001 | <0.0001 | 824 | 3.82 | 1.12 | × | 218 | 7.5 | Comparative Example |
| 24 | 82 | 3.5 | 1.89 | 3.5 | 0.36 | 0.57 | 0.0011 | <0.0001 | 47.5 | 3.30 | 1.79 | ○ | 139 | 108.0 | Comparative Example |
| 25 | 76 | 3.5 | 2.45 | 6.1 | 0.45 | 0.76 | 0.47 | <0.0001 | 38.1 | 3.16 | 2.04 | ○ | 130 | 230.8 | Comparative Example |
| 26 | 221 | 1.5 | 0.00 | 0.8 | 0.21 | 0.0011 | 0.0007 | 0.0009 | 41.0 | 1.89 | 1.02 | ○ | 151 | 11.5 | Reference Example |

11

INDUSTRIAL APPLICABILITY

The Ta powder according to the invention can be applied to not only a tantalum solid electrolytic capacitor but also a powder metallurgy using tantalum powder.

DESCTIRPTION OF REFERENCE SYMBOLS

1: reaction pipe
2: vaporizing part
3: reduction reaction field
4: vaporization furnace
5: reduction furnace
6: carrier gas feeding pipe
7: reduction gas feeding pipe
8: exhaust pipe

**Claims**

1. A method of producing a Ta powder by vaporizing $TaCl_5$ as a raw material through heating, feeding to a reduction reaction field together with a carrier gas and reducing the $TaCl_5$ vapor with $H_2$ gas in the reduction reaction field to form Ta powder comprising a single phase of $\beta$-Ta of tetragonal system or a mixed phase of $\beta$-Ta of tetragonal system and $\alpha$-Ta of cubic system and having an average particle size of 30~150 nm, wherein the average particle size means the average particle size of primary particles of the Ta powder on a number basis, determined by observing the Ta powder with a scanning type electron microscope SEM at a magnification of 5000 times, during which diameters of optionally extracted 1000 particles are measured by imaging, to determine an average value on a number basis by means of image analysis type particle size distribution software,
   wherein the method is **characterized in that** a feeding rate of the $TaCl_5$ vapor to the reduction reaction field is 0.05~5.0 g/cm$^2$ • min and a residence time of the $TaCl_5$ vapor in the reduction reaction field is 0.1~5 seconds, and the $TaCl_5$ vapor is reduced at a temperature of 1100~1600°C,.

2. The method according to claim 1, wherein the Ta powder has a CV value ($\mu$F • V/g) of not less than 220 kCV.

3. A Ta granulated powder formed by granulating a Ta powder obtained by the method of claim 1 or 2 and **characterized by** having
   a median diameter d50 on a volume basis of 10~500 $\mu$m obtained by measuring an image of particles photographed with a scanning type electron microscope at a magnification of 100 times by means of an image analysis type particle particle size distribution software,
   a bulk density of 2.0~5.0 g/cm$^3$ measured according to JIS Z2504 and
   a fluidity of 1~5 g/sec as measured with a funnel having an orifice diameter of 2.63 mm according to JIS Z2502.

4. Use of the Ta granulated powder according to claim 3, in an electrode of a tantalum solid electrolytic capacitor.

**Patentansprüche**

1. Verfahren zur Herstellung eines Ta Pulvers durch Verdampfen von $TaCl_5$ als Ausgangsmaterial durch Erhitzen, Einführen in einen Reduktions-Reaktionsbereich zusammen mit einem Trägergas und Reduzieren des $TaCl_5$ Dampfes mit $H_2$ Gas in dem Reduktions-Reaktionsbereich um Ta Pulver herzustellen, welches eine Einzelphase von $\beta$-Ta des tetragonalen Systems oder eine gemischte Phase aus $\beta$-Ta des tetragonalen Systems und $\alpha$-Ta des kubischen Systems umfasst und eine mittlere Teilchengröße von 30 - 150 nm aufweist, worin die mittlere Teilchengröße die mittlere Teilchengröße von Primärteilchen des Ta Pulvers auf Zahlenbasis bedeutet, bestimmt durch Beobachten des Ta Pulvers mit einem Scan-Typ-Elektronenmikroskop SEM bei einer 5000-fachen Vergrößerung, wobei die Durchmesser von ggf. extrahierten 1000 Teilchen durch Bildaufnahme gemessen werden, um einen Mittelwert auf Zahlenbasis mittels einer Teilchengrößerverteilungs-Software vom Bildanalyse-Typ zu bestimmen,
   wobei das Verfahren **dadurch gekennzeichnet ist, dass** die Zuführungsrate des $TaCl_5$ Dampfes in den Reduktions-Reaktionsbereich 0,05 - 5,0 g/cm$^2$•min und eine Verweilzeit des TaCl$_5$ Dampfes in dem Reduktions-Reaktionsbereich 0,1 - 5 Sekunden beträgt und der TaCl$_5$ Dampf bei einer Temperatur von 1100 - 1600°C reduziert wird.

**2.** Verfahren nach Anspruch 1, worin das Ta Pulver einen CV-Wert (μF•V/g) von nicht weniger als 220 kCV aufweist.

**3.** Granuliertes Ta Pulver, hergestellt durch Granulieren eines Ta Pulvers, erhalten nach dem Verfahren gemäß Anspruch 1 oder 2 und **gekennzeichnet durch**
einen mittleren Durchmesser d50 auf Volumenbasis von 10 - 500 μm, erhalten durch Messen eines Bildes von Teilchen, fotografiert mit einem Scan-Typ-Elektronenmikroskop bei einer 100-fachen Vergrößerung, mit einer Teilchengrößenverteilungs-Software vom Bildanalysetyp,
eine Schüttdichte von 2,0 - 5,0 g/cm$^3$, gemessen nach JIS Z2504 und
eine Fluidität von 1 - 5 g/sec gemessen mit einem Trichter mit einem Öffnungsdurchmesser von 2,63 mm gemäß JIS Z2502.

**4.** Verwendung des granulierten Ta Pulvers nach Anspruch 3 in einer Elektrode eines Festelektrolyt-Tantal-Kondensators.

**Revendications**

**1.** Procédé de fabrication d'une poudre de Ta grâce à la vaporisation de TaCl$_5$ pris comme matière brute grâce à un chauffage, à l'application à un champ de réaction de réduction en même temps qu'un gaz porteur et à la réduction du TaCl$_5$ vaporisé avec du gaz H$_2$ dans le champ de réaction de réduction pour former une poudre de Ta comprenant une phase simple de β-Ta d'un système tétragonal ou une phase mixte de β-Ta de système tétragonal et de α-Ta de système cubique, et présentant une taille moyenne des particules de 30 nm à environ 150 nm, la taille moyenne des particules signifiant la taille moyenne des particules primaires de la poudre de Ta sur une base numérique, déterminée en observant la poudre de Ta grâce à un microscope électronique de type à balayage, SEM, avec une amplification de 5000, étape pendant laquelle les diamètres de 1000 particules extraites en option sont mesurés par imagerie, afin de déterminer une valeur moyenne sur une base numérique au moyen d'un logiciel de répartition des tailles des particules du type analyse d'image,
le procédé étant **caractérisé en ce que** le débit d'alimentation de la vapeur de TaCl$_5$ sur le champ de réaction de réduction vaut de 0,05 g/cm$^2$•min à environ 5,0 g/cm$^2$•min, et **en ce que** le temps de présence de la vapeur de TaCl$_5$ dans le champ de réaction de réduction est de 0,1 seconde à environ 5 secondes, et la vapeur de TaCl$_5$ est réduite à une température comprise entre 1100 °C et environ 1600 °C.

**2.** Procédé selon la revendication 1, dans lequel la poudre de Ta présente une valeur CV (μF•V/g) qui n'est pas inférieure à 220 kCV.

**3.** Poudre de Ta granulée par granulation d'une poudre de Ta obtenue par le procédé conforme à la revendication 1 ou à la revendication 2, **caractérisée en ce qu'**elle présente :

un diamètre moyen d50 sur une base volumique de 10 μm à environ 500 μm obtenue en mesurant une image des particules photographiées par un microscope électronique de type à balayage avec une amplification de 100 au moyen d'un logiciel de répartition des tailles des particules de type analyse d'image,
une densité apparente de 2,0 g/cm$^3$ à environ 5,0 g/cm$^3$ mesurée conformément à la norme JIS Z2504, et
une fluidité de 1 g/sec à environ 5 g/sec telle que mesurée avec un entonnoir présentant un orifice de diamètre 2,63 mm conformément à la norme JIS Z2502.

**4.** Utilisation de poudre de Ta granulée conforme à la revendication 3 dans une électrode d'un condensateur électrolytique solide au tantale.

## FIG. 1

15.0kV 8.8mm x50.0k          1.00um

## FIG. 2

H₂ gas
Ar gas
TaCl₅ → TaCl₅ vapor
Ta powder
To collection vessel

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005099936 A1
- JP 2002206105 A
- JP 2002544375 A
- JP H02310301 A
- JP S64073009 A
- JP H06025701 A
- JP 2007335883 A
- JP 2002134358 A